# EUROPEAN PATENT APPLICATION

(11) **EP 4 650 226 A1**
(43) Date of publication of application: **19.11.2025**
(21) Application number: 25172605.5
(22) Date of filing: 25.04.2025
(51) Int. Cl.: B60R 16/023, B62J 45/00, G07C 5/00, H01Q 1/32

(54) **VEHICLE**

(30) Priority: 16.05.2024 JP 2024080015
(71) Applicant: Kawasaki Motors, Ltd., Akashi, Hyogo 673-8666 (JP)
(72) Inventor: FUKAMI, Takuya, Hyogo, 673-8666 (JP); TOMINAGA, Jun, Hyogo, 673-8666 (JP); MARUO, Minoru, Hyogo, 673-8666 (JP)
(74) Representative: Kilian Kilian & Partner mbB

(57) **Abstract**

A vehicle is a vehicle performing wireless communication with a terminal apparatus, and includes an electrical component and a wireless communication unit. The wireless communication unit is formed separately from the electrical component and connected to the electrical component via a signal line.

## Description

### CROSS-REFERENCE TO RELATED APPLICATION

The present application claims priority to Japanese Patent Application No. 2024-080015, filed on May 16, 2024, the content of which is incorporated herein by reference.

### BACKGROUND

### Technical Field

The present disclosure relates to a vehicle including a wireless communication unit.

### Description of the Background Art

Japanese Patent Application Laid-Open No. 2022-067919 discloses that an engine ECU performs wireless communication with a terminal apparatus via a communication circuit.

### SUMMARY

A vehicle is a vehicle performing wireless communication with a terminal apparatus and including an electrical component and a wireless communication unit formed separately from the electrical component and connected to the electrical component via a signal line.

According to the vehicle, it is possible to easily deal with addition or change of a wireless communication function.

These and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a side view illustrating a whole configuration of an automatic two-wheel vehicle according to an embodiment.
Fig. 2 is a block diagram illustrating an electrical configuration of the automatic two-wheel vehicle.
Fig. 3 is an explanation diagram illustrating a joint connector.
Fig. 4 is a schematic cross-sectional view illustrating a part where a wireless communication unit and an electrical component are mounted.
Fig. 5 is a schematic perspective view illustrating a part where the wireless communication unit and a joint connector are mounted.
Fig. 6 is a block diagram illustrating an electrical configuration of an automatic two-wheel vehicle according to a modification example.

### DESCRIPTION OF THE PREFERRED EMBODIMENTS

### (Embodiment)

A vehicle according to an embodiment will be hereinafter described. Described in the present embodiment is an example that a vehicle is a saddle-riding vehicle, and more specifically, an automatic two-wheel vehicle. The saddle-riding vehicle is a vehicle in which a driver drives a vehicle while straddling a seat. For example, the saddle-riding vehicle is an automatic three-wheel vehicle, an all terrain vehicle (ATV), and a personal watercraft (PWC) in addition to the automatic two-wheel vehicle. The vehicle may not be the saddle-riding vehicle, but may be a four-wheel automobile, for example.

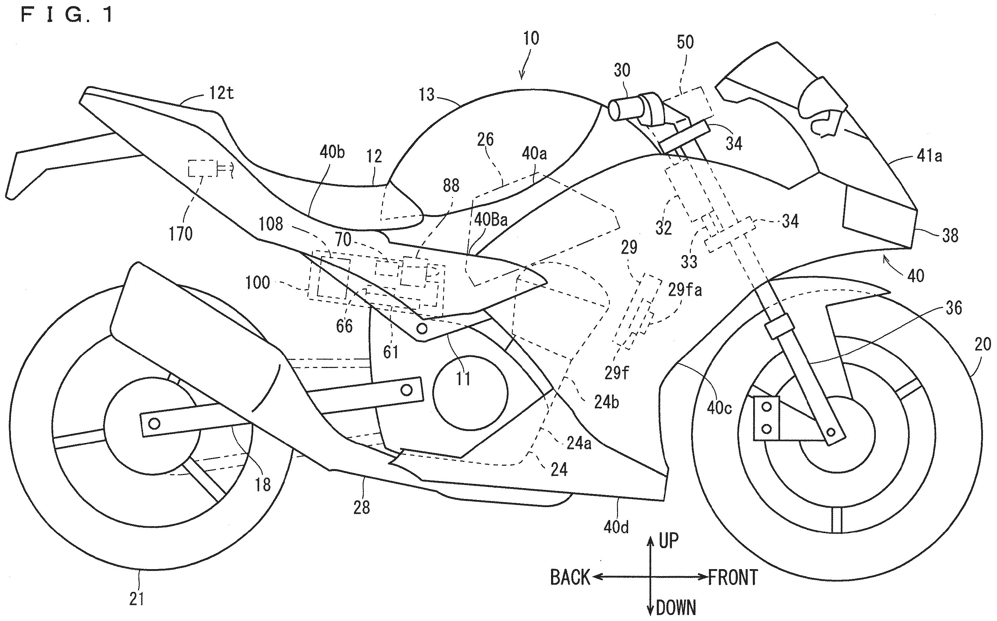

Fig. 1 is a side view illustrating a whole configuration of an automatic two-wheel vehicle 10. When upper and lower sides, front and back sides, and right and left sides are referred in the description hereinafter, each direction is defined as follows. A side on which a front wheel 20 and a rear wheel 21 of the automatic two-wheel vehicle 10 make contact with a road surface is a lower side, and a side opposite thereto is an upper side. A travel direction in which the automatic two-wheel vehicle 10 travels is a front side, and a side opposite thereto is a back side. Right and left based on a user as a driver riding on the automatic two-wheel vehicle 10 are right and left sides of the automatic two-wheel vehicle 10. A width direction is a right-left vehicle width direction.

The automatic two-wheel vehicle 10 includes a vehicle body frame 11, an engine 24, a seat 12, a fuel tank 13, a handle 30, the front wheel 20, and the rear wheel 21.

The vehicle body frame 11 is a part serving as a framework supporting each unit of the automatic two-wheel vehicle 10.

The engine 24 is a power unit driving traveling of the automatic two-wheel vehicle in the automatic two-wheel vehicle 10. The engine 24 is an internal combustion engine, for example. The engine 24 includes a crank case 24a and a cylinder assembly 24b located above the crank case 24a.

The cylinder assembly 24b includes a cylinder block and a cylinder head. A space in which a piston is reciprocated is formed in the cylinder block. An ignition plug and a valve for intaking and exhausting air are assembled to the cylinder head. The cylinder head covers the cylinder block to form a combustion chamber. The cylinder head is covered by a cylinder head cover.

The crank case 24a is joined to a lower part of the cylinder assembly 24b. A crank shaft is rotatably supported by the crank case.

A flow path through which a cooling medium can pass is formed in the engine 24. A flow path is formed in the cylinder block and the cylinder head, for example.

An air cleaner box 26 is located above the engine 24. For example, the engine 24 is located below the fuel tank 13. The cylinder assembly 24b protrudes from a part of the engine 24 close to a front side toward an obliquely upper front side. The air cleaner box 26 is located above the cylinder assembly 24b. The air cleaner box 26 is located below the fuel tank 13.

A filter is housed in the air cleaner box 26. The filter removes a foreign material included in the air taken in the engine 24.

An exhaust pipe 28 extends from the engine 24. The exhaust pipe 28 is a pipe exhausting gas which has been combusted in the engine 24. The exhaust pipe is joined to the cylinder assembly 24b of the engine 24 to be connected to an exhaust port formed in the cylinder head. The exhaust pipe 28 extends to a lower side from a front part of the cylinder assembly 24b and also extends toward a rear side of the vehicle through a lateral side of a lower part of the engine 24.

The engine 24 may have a configuration in which a primary reduction mechanism including a clutch and a transmission gear, for example, is integrated.

A radiator 29 is located in front of the engine 24. The radiator 29 is a heat exchanger for exchanging heat between a cooling medium cooling the engine 24 and external air. The radiator 29 is located in front of the air cleaner box 26. The radiator 29 is located in back of the front wheel 20. In traveling, air flowing around the front wheel 20 flows into the radiator 29 and cools the cooling medium circulating through the radiator 29.

The radiator 29 may include a fan 29f. For example, the fan 29f may be a fan rotated and driven by a fan motor 29fa to send a wind toward the rear side. In this case, the air flowing into the radiator 29 from the front side in traveling smoothly flows out of the rear side through the radiator 29.

The power unit may not be the internal combustion engine. The power engine may be an electrical motor, for example.

The seat 12 is supported by the vehicle body frame 11 in an intermediate position of the vehicle body frame 11 in the front-back direction. The seat 12 is a seat on which a driver is seated.

The fuel tank 13 is located in front of the seat 12 in the intermediate part of the vehicle body frame 11 in the front-back direction. The seat 12 and the fuel tank 13 may be located in a position higher than the engine 24 in height. A tandem seat 12t for a passenger may be provided in back of the seat 12.

The fuel tank 13 is disposed in a position overlapped with the engine 24 in the front-back direction. For example, eighty percent or more of the fuel tank 13 may be disposed in a position overlapped with the engine 24 in the front-back direction of the vehicle.

The handle 30 is supported by a front part of the vehicle body frame 11. For example, a head pipe 32 is provided to the front part of the vehicle body frame 11. A steering shaft 33 is rotatably inserted into the head pipe 32. A pair of upper and lower brackets 34 are supported by the steering shaft 33. The handle 30 is supported by the bracket 34. The handle 30 is located in front of the seat 12, that is in front of the fuel tank 13. The driver seated on the seat 12 can operate the handle 30 in a forward posture.

A headlight 38 may be supported in front of the handle 30.

A meter unit 50 may be located more frontward than the seat 12. The meter unit 50 is a unit displaying a state of the automatic two-wheel vehicle 10. For example, the meter unit 50 displays a vehicle speed, a remaining fuel amount, a travel distance, and the number of rotation of the engine 24. The meter unit 50 may be supported on a center of the handle 30 in a width direction, for example. The meter unit 50 may be supported by a frame in a position more frontward than the handle 30 via a bracket, for example.

The fuel tank 13 is an example of an energy storage apparatus storing energy for driving an internal combustion engine. When the power engine is the electrical motor, the energy storage apparatus may be a battery.

A front fork 36 is supported by the bracket 34 to extend toward a lower side. The front wheel 20 is rotatably supported on a lower end portion of the front fork 36. When the handle 30 is operated, the steering shaft 33, the bracket 34, and the front fork 36 are rotated around an axis of the head pipe 32. The front wheel 20 is also rotated around the axis of the head pipe 32 together with this rotation, and a direction of the front wheel 20 is changed.

A swing arm 18 is located in back of the vehicle body frame 11. For example, the swing arm 18 extends to the rear side from a pivot bracket in back of the engine 24. The rear wheel 21 is rotatably supported on a back end portion of this swing arm 18.

Transmission of rotation drive force of the engine 24 described above to the rear wheel 21 via a transmission mechanism including a gear and a chain rotationally drives the rear wheel 21. As the other example, the transmission mechanism may include an annular belt such as a toothed belt. The power transmission mechanism may include a shaft drive mechanism including a drive shaft and a bevel gear, for example.

The automatic two-wheel vehicle 10 includes a side cover 40. The side cover 40 is a mold cover formed of resin, for example. The side cover 40 is a cover covering both right and left sides of the vehicle body frame 11 in a position in back of the headlight 38.

The side cover 40 may be made up of a combination of a plurality of covers. For example, the side cover 40 may include a first side cover 40a, a second side cover 40b, a third side cover 40c, and a fourth side cover 40d.

The first side cover 40a covers a region from a lower side of the fuel tank 13 to a lower side of a front end portion of the seat 12. The second side cover 40b covers a region from a lower side of intermediate part of the seat 12 in the front-back direction to a lower side of the tandem seat 12t. Also, the second side cover 40b further covers a region on a lower side of a back end portion of the first side cover 40a. Thus, the first side cover 40a and the second side cover 40b are located adjacent to each other in the up-down direction below a region from the rear part of the fuel tank 13 to the front part of the seat 12. In this region, the first side cover 40a and the second side cover 40b are located adjacent to each other via a boundary extending in the front-back direction.

The third side cover 40c is made up to cover both lateral sides of the front side of the vehicle. In the embodiment, the third side cover 40c is made up to extend from the headlight 38 toward the rear side and cover at least the cylinder assembly of the engine 24 from the lateral side. The third side cover 40c is located partially adjacent to the first side cover 40a in the up-down direction. The third side cover 40c is located adjacent to the second side cover 40b in the front-back direction.

The fourth side cover 40d extends from the lower side edge of the rear end portion of the third side cover 40c toward the lower part on the lateral side of the engine 24.

The example of dividing the side cover 40 described above is an example; thus, the configuration example of the side cover is not limited thereto described above.

The automatic two-wheel vehicle 10 may include the other cover. The other cover is a cover 41a referred to as a front cover or a front cowl, for example. The automatic two-wheel vehicle does not necessarily have the cover.

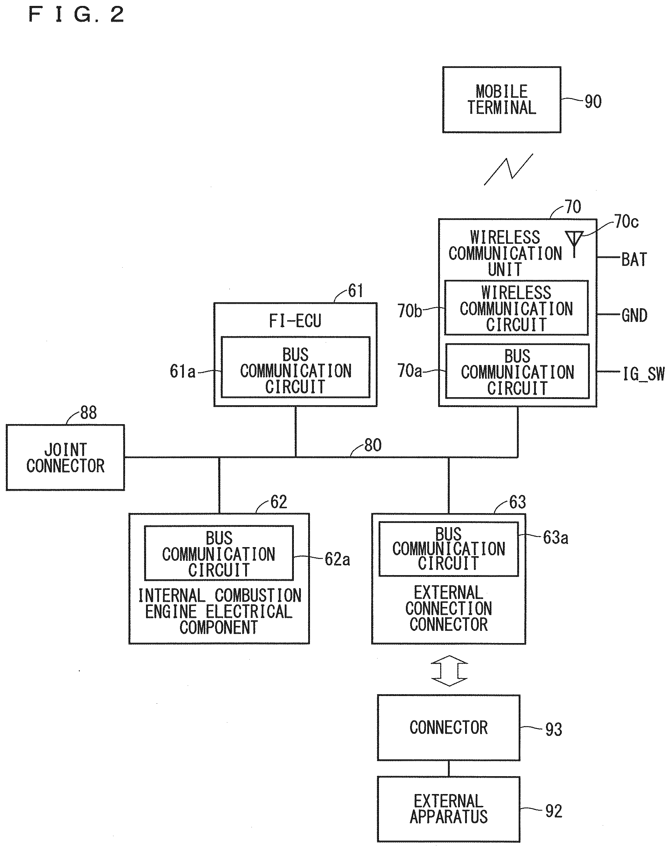

Fig. 2 is a block diagram illustrating an electrical configuration of the automatic two-wheel vehicle 10. The automatic two-wheel vehicle 10 is a vehicle which can perform wireless communication with a terminal apparatus 90, and includes an electrical component 61 and a wireless communication unit 70. The terminal apparatus is, for example, a mobile terminal 90.

The electrical component 61 is an electrical component in the automatic two-wheel vehicle 10, and is a control apparatus, a sensor, or an actuator, for example. For example, the electrical component 61 is an electric control unit (ECU) including a control apparatus, more specifically, a processor or a memory, for example. In the present embodiment, the electrical component 61 may be a fuel injection-electric control unit (FI-ECU). The FI-ECU is an example of a control unit controlling the engine 24.

Since the electrical component 61 and the wireless communication unit 70 are separately formed, the wireless communication unit 70 can be easily added without significantly changing a design of the electrical component 61.

The automatic two-wheel vehicle 10 may further include the electrical components 62 and 63.

The electrical component 62 is an internal combustion engine electrical component including various sensor incorporated into the engine 24 and an actuator driving a fuel injection apparatus, for example. The electrical component may be an inertial measurement unit (IMU) or a vehicle speed sensor.

The electrical component 63 is an external connection connector for external wired connection. For example, when a connector 93 of an external apparatus 92 is connected to the external connection connector 63, the external apparatus 92 can be connected to the electrical components 62 and 63 in the automatic two-wheel vehicle 10, for example. The external apparatus 92 may be a diagnosis apparatus for analyzing a state of the automatic two-wheel vehicle 10, for example.

The wireless communication unit 70 is a unit performing wireless communication with a terminal apparatus. For example, the wireless communication unit 70 is a wireless communication unit including a wireless communication circuit 70b performing communication conforming to a communication standard of Bluetooth (registered trademark) and an antenna 70c. The wireless communication unit 70 may be a wireless communication unit performing communication conforming to the other communication standard such as a Wi-Fi communication standard.

The terminal apparatus 90 is a terminal apparatus including a wireless communication function such as a smartphone or a tablet, for example.

The electrical component 61 and the wireless communication unit 70 are connected via a wired signal line 80. That is to say, the wireless communication unit 70 performs wireless communication with the terminal apparatus 90 on an outer side of the automatic two-wheel vehicle 10, and performs wired communication with the electrical component 61 incorporated into the automatic two-wheel vehicle 10. The terminal apparatus 90 is connected to the electrical component 61 via the wireless communication unit 70. Accordingly, information held by the electrical component 61 is obtained in the terminal apparatus 90. For example, an operation history of the engine 24 included in the FI-ECU can be obtained in the terminal apparatus 90, and a state of the engine 24 can be obtained through the terminal apparatus 90.

The signal line 80 connecting the electrical component 61 and the wireless communication unit 70 may be a common signal line such as a bus line connecting the electrical component 61 and the other electrical component, or may also be a signal line for communication between the electrical component 61 and the wireless communication unit 70 one-on-one. Described in the present embodiment is the example that the signal line 80 connecting the electrical component 61 and the wireless communication unit 70 is a bus line commonly used as a signal line between the plurality of electrical components. Thus, the other electrical components 62 and 63 are connected to the signal line in addition to the electrical component 61 and the wireless communication unit 70.

In this case, for example, incorporated into each of the wireless communication unit 70 and the electrical components 61, 62, and 63 are bus communication circuits 70a, 61a, 62a, and 63a for transmitting a signal to the signal line 80 as the bus line or receiving a signal from the signal line 80. The wireless communication unit 70 and the electrical components 61, 62, and 63 can perform communication with each other via a common signal line.

When the signal line 80 as an existing bus line is included, it is sufficient that the wireless communication unit 70 is additionally connected to the signal line 80. Thus, the wireless communication function can be easily added.

The signal line 80 as the bus line may be a signal line conforming to a controller area network (CAN) standard, for example. In this case, the signal line may be a twist pair cable.

A joint connector 88 may be used for connecting the signal line connected to each of the wireless communication unit 70 and the electrical components 61, 62, and 63 as the common signal line.

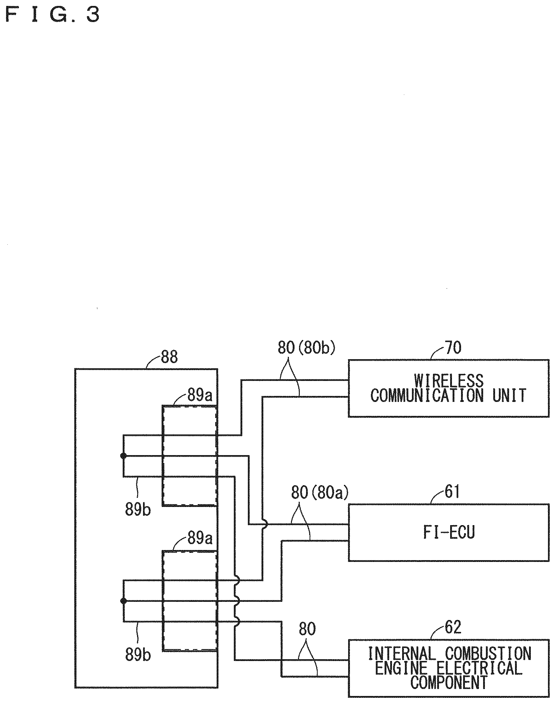

For example, the joint connector 88 includes a connector 89a to which the signal line 80 extending from each of the wireless communication unit 70, the FI-ECU 61, and the internal combustion engine electrical component 62 and a relay circuit 89b relaying and connecting a terminal of the connector 89a as illustrated in Fig. 3. Since the signal line 80 extending from each of the wireless communication unit 70, the FI-ECU 61, and the internal combustion engine electrical component 62 is connected to the joint connector 88, each signal line 80 is connected to serve as the common bus line via the relay circuit 89b.

The joint connector 88 is an example of a junction component branching the signal line 80 into a second signal line 80b on a side of the wireless communication unit 70 and a first signal line 80a on a side of the electrical component 61. The wireless communication unit 70 and the electrical component 61 may be directly connected without intervention of the joint connector 88.

The other electrical wire such as a power source line, a ground line, and the other signal line, for example, is considered to be connected to the wireless communication unit 70 and the electrical components 61, 62, and 63. For example, a power source line, a ground line, and an on-off signal line of an ignition switch may be connected to the wireless communication unit 70.

Described more specifically is an example of mounting the wireless communication unit 70 and the electrical component 61.

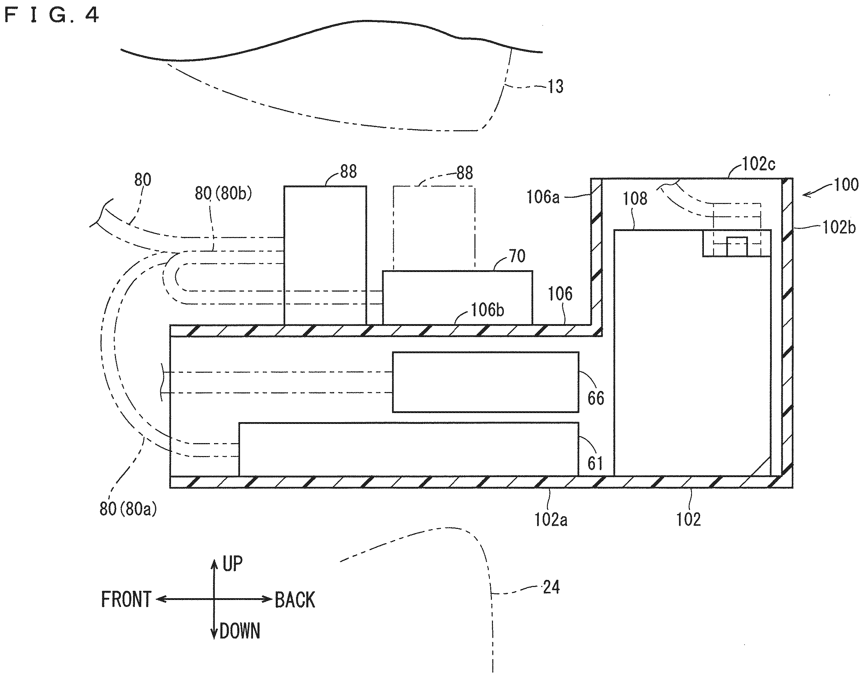

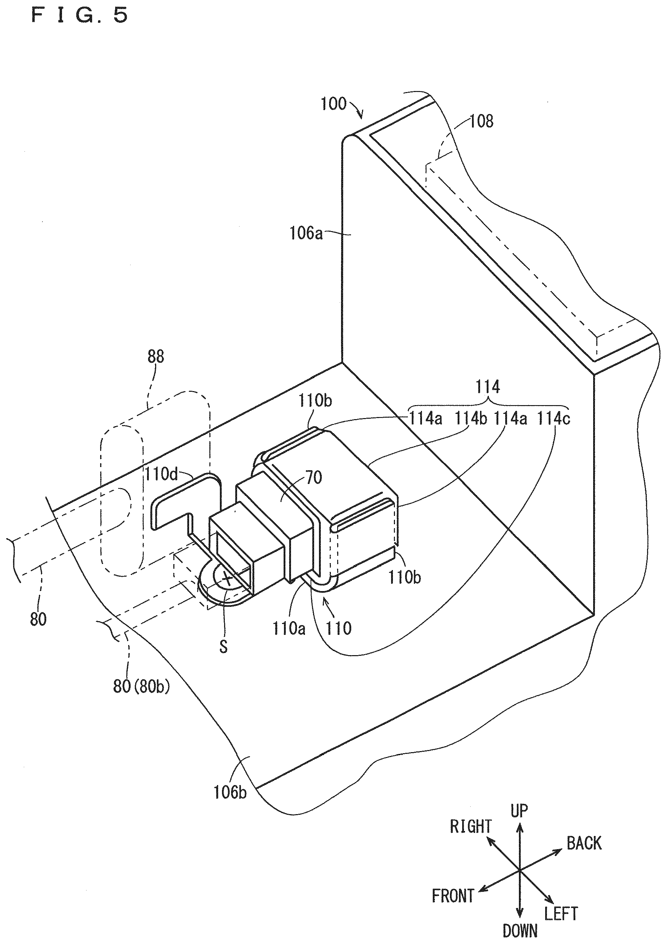

Fig. 4 is a schematic cross-sectional view illustrating a part where the wireless communication unit 70 and the electrical component 61 are mounted. Fig. 5 is a schematic perspective view illustrating a part where the wireless communication unit 70 and the joint connector 88 are mounted.

As illustrated in Fig. 1, Fig. 4, and Fig. 5, the wireless communication unit 70 and the electrical component 61 may be disposed with a positional relationship so as to be at least partially overlapped with each other in the front-back direction. That is to say, when a range where the wireless communication unit 70 is located in a front-back direction and a range where the electrical component 61 is located in a front-back direction are projected in an axis of the front-back direction, the ranges thereof are overlapped at least partially in the axis of the front-back direction. For example, the wireless communication unit 70 is vertically overlapped with the electrical component 61 at least partially in a side view. In this case, the wireless communication unit 70 and the electrical component 61 can be easily connected with a short distance. For example, the signal line 80 connected to the electrical component 61 can be branched near the electrical component 61 and easily connected to the wireless communication unit 70.

In the present embodiment, a case 100 is disposed below the seat 12. More specifically, the case 100 is disposed in a region from a lower region in the rear part of the fuel tank 13 to a lower region in the intermediate part of the seat 12 in the front-back direction. The case 100 is formed by resin, for example. The case 100 includes a battery case 102 and an additional case 106. The case 100 is directly or indirectly supported by the vehicle body frame 11.

The battery case 102 includes a bottom part 102a, a rear wall 102b, and a sidewall part 102c. The rear wall 102b stands upright from a rear edge of the bottom part 102a. The pair of sidewall parts 102c stand upright from at least a part of both side edges of the bottom part 102a closer to the rear side. The pair of sidewall parts 102c are also continuously formed with the both side edges of the rear wall 102b. Thus, a battery housing space surrounded by the rear wall 102b and the pair of sidewall parts 10d is formed in a part of the case 100 closer to the rear side.

The additional case 106 includes a partition wall 106a disposed in front of the rear wall 102b with an interval and a support plate 106b extending from the partition wall 106a toward the front side in a horizontal posture. The additional case 106 may be a part fixed to the battery case 102 with a fitting structure or a screw, for example.

The battery 108 is supported on the bottom part 102a in a section surrounded by the rear wall 102b, the pair of sidewall parts 102c, and the partition wall 106a.

The support plate 106b is disposed on an upper side of the bottom part 102a at an interval.

The wireless communication unit 70 and the joint connector 88 are located on the support plate 106b. The FI-ECU 61 is located between the bottom part 102a and the support plate 106b. A relay unit 66 may be located between the bottom part 102a and the support plate 106b.

The wireless communication unit 70, the joint connector 88, the FI-ECU 61, and the relay unit 66 are supported by the battery case 100 by being directly screwed to the battery case 100 or fixed thereto by a bracket.

For example, as illustrated in Fig. 5, a bracket 110 is fixed on the support plate 106b with a screw.

The bracket 110 is a member made by performing press working on a metal plate, and includes a bottom plate part 110a and a pair of side plate parts 110b. The bottom plate part 110a is formed into a plate-like shape extending on a bottom surface of the wireless communication unit 70. A screw insertion hole for screwing is formed in one end portion of the bottom plate part 110a. A screw S is inserted into the screw insertion hole and screwed and fixed to the support plate 106b.

The pair of side plate parts 110b stand upright from both side edges of the bottom plate part 110a. An interval in which the wireless communication unit 70 can be disposed is located between the pair of side plate parts 110b. It is preferable that at least a part of an elastic intervention member 114 can intervene between the pair of side plate parts 110b and the wireless communication unit 70. The elastic intervention member 114 is formed by an elastic member such as rubber, and includes a pair of side parts 114a into which the pair of side plate parts 110b can be inserted and connection parts 114b and 114c connecting the pair of side parts 114a, for example. In the present embodiment, the elastic intervention member 114 is formed into a rectangular cylindrical shape surrounding the wireless communication unit 70.

The elastic intervention member 114 surrounds the wireless communication unit 70 so that both side parts, the upper part, and the lower part of the wireless communication unit 70 is covered by the pair of side parts 114a, the connection part 114b, and the connection part 114c, respectively. In this state, the pair of side plate parts 110b are inserted into the pair of side parts 114a. Accordingly, the bracket 110 supports the wireless communication unit 70 via the elastic intervention member 114.

In the support state described above, the pair of side parts 114a can partially intervene between the side plate part 110b and the side surface of the wireless communication unit 70. For example, a flat insertion hole into which the side plate part 110b can be inserted is formed in the side part 114a. A part of the side part 114a located on an inner side than the side plate part 110b can intervene between the side plate part 110b and the wireless communication unit 70 while the side plate part 110b is inserted into the side part 114a. It is also applicable that a slit-like opening is formed in the side part and the side plate part is inserted into the slit-like opening. Also in this case, a part of a peripheral edge of the slit-like opening can intervene between the side plate part and the wireless communication unit.

Since the wireless communication unit 70 is supported by the case 100, vibration of the vehicle body frame 11 is hardly transmitted to the wireless communication unit 70. In addition, since at least a part of the elastic intervention member 114 intervenes between the bracket 110 and the wireless communication unit 70, vibration of the vehicle body frame 11 is further hardly transmitted to the wireless communication unit 70.

The bracket 110 may include an additional support piece 110d. The additional support piece 110d protrudes to the upper side from one side part of one end side of the bottom plate part 110a. The joint connector 88 may be supported by the additional support piece 110d. For example, the joint connector 88 may be fixed to the additional support piece 110d by screwing or a locking structure.

Accordingly, both the wireless communication unit 70 and the joint connector 88 can be supported by one bracket 110. The wireless communication unit 70 and the joint connector 88 may be supported by support components different from each other, respectively.

A positional relationship of each unit is described.

The wireless communication unit 70 is located above the FI-ECU 61 as the control unit. Although the wireless communication unit 70 is preferably overlapped with the FI-ECU 61 in the front-back direction, this configuration is not limited thereto. In the present embodiment, the wireless communication unit 70 is overlapped with the FI-ECU 61 in the front-back direction. Preferably, half or more of the wireless communication unit 70, and more preferably, 2/3 or more thereof is overlapped with the FI-ECU 61 in the front-back direction.

When the wireless communication unit 70 is located above the FI-ECU 61, the wireless communication unit 70 may be an obstacle in having access to the FI-ECU 61 from above. Accordingly, it is not easy to have access to the FI-ECU 61. Since the wireless communication unit 70 can be located closer to a driver seated on the seat 12 than the FI-ECU 61, communication is favorably performed.

As described above, in the front-back direction, the case 100 is disposed in the region from the lower region in the rear part of the fuel tank 13 to the lower region in the intermediate part of the seat 12 in the front-back direction.

The battery 108 is located closer to the rear side in the case 100, and is located below the seat 12. The wireless communication unit 70 is located closer to the battery 108 in the case 100, and is located below the fuel tank 13. That is to say, it is sufficient that the wireless communication unit 70 is located below the fuel tank 13 while at least a part thereof is overlapped with the fuel tank 13

Thus, it is possible to easily have access to the battery 108 by detaching the seat 12, and maintenance can be easily performed on the battery 108. The wireless communication unit 70 supported by the same case 100 is supported more forward than the battery 108, thus is disposed below the fuel tank 13. Accordingly, the wireless communication unit 70 can be protected by the fuel tank 13, and it is possible to have hardly access to the wireless communication unit 70 directly from outside. The wireless communication unit 70 is hardly exposed to solar light by the fuel tank 13.

The first signal line 80a led out from the FI-ECU 61 and the second signal line 80b led out from the wireless communication unit 70 extend in the same direction. In the present embodiment, the first signal line 80a extends from the FI-ECU 61 toward the front side. The second signal line 80b extends from the wireless communication unit 70 toward the front side. If the plurality of signal lines extend in various directions, there is a possibility that a long wiring space is necessary in a direction in which each signal line extends, and also, an operation needs to be performed along the various direction in wiring. In the present embodiment, the first signal line 80a and the second signal line 80b can be easily disposed together in the same posture in the front-back direction, and a space for arranging the signal lines 80a and 80b can be easily reduced. An operation of arranging the signal lines 80a and 80b can also be easily performed.

In this case, the joint connector 88 as the junction component may be disposed with a positional relationship so as to be at least partially overlapped with at least one of the electrical component 61 and/or the wireless communication unit 70 in the front-back direction. That is to say, when a range where the joint connector 88 is located in a front-back direction and a range where the electrical component 61 is located or a range where the wireless communication unit 70 is located in a front-back direction are projected in an axis of the front-back direction, the ranges thereof are overlapped at least partially in the axis of the front-back direction. For example, the joint connector 88 is vertically overlapped with the wireless communication unit 70 or the electrical component 61 at least partially in a side view.

In the present embodiment , the joint connector 88 is overlapped with the FI-ECU 61 in the front-back direction. Accordingly, the first signal line 80a connecting the joint connector 88 and the FI-ECU 61 can be shortened.

When the joint connector 88 is disposed in a position shown by a dash-double-dot line in Fig. 4, the joint connector 88 can also be overlapped with the wireless communication unit 70 in the front-back direction. Accordingly, the second signal line 80b connecting the joint connector 88 and the wireless communication unit 70 can be shortened.

The wireless communication unit 70 is disposed above the engine 24. It is sufficient that at least a part of the wireless communication unit 70 is overlapped with the engine 24 in the front-back direction. Thus, the wireless communication unit 70 is effectively protected between the engine 24 and the fuel tank 13.

The bottom part 102a as a partition, the support plate 106b, and the bottom plate part 110a intervene between the engine 24 and the wireless communication unit 70. Thus, heat of the engine 24 is hardly transmitted to the wireless communication unit 70, and the wireless communication unit 70 is stably operated easily. The other electrical component can also be considered a type of partition.

In a side view, the wireless communication unit 70 is located away from a joint 40Ba between the first side cover 40a and the second side cover 40b. For example, the joint 40Ba is not overlapped with the wireless communication unit 70 in a side view. More specifically, the wireless communication unit 70 is located inside the second side cover 40b. Thus, if water enters from the joint 40Ba, the water hardly falls on the wireless communication unit 70.

The wireless communication unit 70 is preferably disposed away from a noise generation source. For example, the wireless communication unit 70 is preferably located away from the fan motor 29fa of the radiator 29 in the front-back direction. In the present embodiment, the wireless communication unit 70 and the fan motor 29fa are located away from each other with a distance so that an air cleaner box 26 can be disposed therebetween. Thus, noise generated by the fan motor 29fa is sufficiently reduced. It is also applicable that the radiator 29 is located in front of the cylinder assembly 24b of the engine 24, and the wireless communication unit 70 is disposed in back of the cylinder assembly 24b. Accordingly, the radiator 29 and the wireless communication unit 70 are located away from each other with a distance so that the cylinder assembly 24b can be disposed therebetween. The wireless communication unit 70 is preferably disposed away from also a noise generation source such as the other motor and a magnetic switch. The other motor may be a regulator fan, a magnetic switch, or an electrical motor for traveling.

The wireless communication unit 70 may be located between a rear end of the front wheel 20 and a front end of the rear wheel 21. The wireless communication unit 70 may be located closer to the rear side in relation to a center of the front wheel 20 and the rear wheel 21. Accordingly, it is easy to perform communication with the terminal apparatus 90 of an occupant.

The wireless communication unit 70 is preferably disposed between the vehicle body frames 11 on the right and left sides in the vehicle width direction. Accordingly, the wireless communication unit 70 is easily protected by the vehicle body frames 11 on the right and left sides. The wireless communication unit 70 is preferably located in a position away from the vehicle body frame 11 such as a position on an upper side than the vehicle body frame 11, for example, when seen along the vehicle width direction. Accordingly, the vehicle body frame 11 formed by metal, for example, hardly becomes a radio wave obstacle. The wireless communication unit 70 is preferably disposed inside away from the side cover 40 in the vehicle width direction. Accordingly, even if water enter from a gap of the side cover 40, the water hardly falls on the wireless communication unit 70.

According to the automatic two-wheel vehicle 10 having the above configuration, the wireless communication unit 70 formed separately from the electrical component 61 is connected to the electrical component 61 via the signal line 80. Thus, a design of the existing electrical component 61 can be diverted and the wireless communication unit 70 can be easily added to the automatic two-wheel vehicle 10. A design of the electrical component 61 can be easily changed separately from the wireless communication unit 70. Furthermore, the wireless communication unit 70 is formed separately from the electrical component 61, thus can be disposed in an optional position. From these viewpoints, it is possible to additionally installing or change the design of the wireless communication unit 70 easily.

When the signal line 80 is a common signal line such as a bus line, the wireless communication unit 70 can be easily connected to the electrical component 61. For example, when an existing bus line is included, the wireless communication unit 70 can be additionally connected to the bus line easily.

When the electrical component 61 is the FI-ECU 61 controlling a power engine, there is a high possibility that information regarding a behavior of the automatic two-wheel vehicle 10 is collected in the FI-ECU 61. For example, there is a possibility that an ignition status and an operating time of an internal combustion engine is collected and stored. The information of the FI-ECU 61 can be transmitted to the terminal apparatus 90 outside the automatic two-wheel vehicle 10 via the wireless communication unit 70, and the behavior of the automatic two-wheel vehicle 10 can be easily grasped at an outer part.

If a wireless communication unit is incorporated into a meter ECU controlling display of the meter unit 50, the meter ECU is complicated, and it may be difficult to change a design. Since the wireless communication unit 70 is formed separately from the control unit, the control unit such as the meter ECU can be simplified, and general versability is improved.

When the electrical component 61 and the wireless communication unit 70 are disposed with a positional relationship so as to be at least partially overlapped with each other in the front-back direction, the first signal line 80a connected to the electrical component 61 is easily branched near the electrical component 61 to be connected to the wireless communication unit 70. Accordingly, there is a possibility that the signal line 80 can be shortened. When the signal line 80 is elongated, there is a possibility that noise easily occurs. Thus, when the signal line 80 is shortened, communication performance is improved.

The wireless communication unit 70 is located on the upper side than the FI-ECU 61, thus can make access to the FI-ECU 61 difficult. Accordingly, measures against theft or tamper can be achieved.

Since the first signal line 80a led out from the electrical component 61 and the second signal line 80b led out from the wireless communication unit 70 extend in the same direction, the first signal line 80a and the second signal line 80b are disposed together, and the space for arranging them can be reduced. An operation of arranging the signal lines 80a and 80b can also be performed along the same direction, and can be easily performed.

When the signal line 80a extends along the front-back direction of the vehicle, the wireless communication unit 70 having a limited size in the vehicle width direction can be easily mounted to the automatic two-wheel vehicle 10.

The joint connector 88 as the junction component is disposed with the positional relationship so as to be at least partially overlapped with at least one of the electrical component 61 and/or the wireless communication unit 70 in the front-back direction. Thus, the length of the first signal line 80a or the second signal line 80b can be reduced.

The wireless communication unit 70 is located below the fuel tank 13, thus can be protected by the fuel tank 13. Furthermore, since the wireless communication unit 70 is located in a lower position than the lower end of the fuel tank 13, radio wave for wireless communication can be transmitted around the fuel tank 13, and the wireless communication unit 70 can perform wireless communication with the terminal apparatus 90 with no problem.

Since the bottom part 102a and the bottom plate part 110a as the partition intervene between the engine 24 and the wireless communication unit 70, heat generated in the engine 24 is hardly transmitted to the wireless communication unit 70.

In a side view, the wireless communication unit 70 is located away from the joint 40Ba between the first side cover 40a and the second side cover 40b in a side view. Thus, even if water enters from the joint between the first side cover 40a and the second side cover 40b, the wireless communication unit 70 hardly gets water.

Since the wireless communication unit 70 is located away from the radiator 29 in the front-back direction, noise influence by the fan motor 29fa hardly reaches the wireless communication unit 70.

### {Modification example}

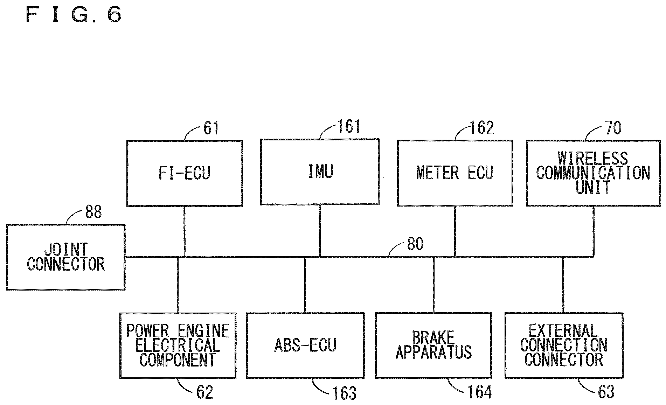

Although the configuration is not limited to the example described in the above embodiments, various electrical components can be connected to the bus line. For example, as illustrated in Fig. 6, an inertial measurement unit (IMU) 161, a meter ECU 162, an ABS-WCU 163, and a brake apparatus 164 including an actuator may be connected to a communication line as the bus line.

The meter ECU is a control unit controlling display of the meter unit 50. The ABS-ECU is a control unit controlling a brake operation of an anti-lock brake system (ABS).

Although the arrangement position of the wireless communication unit 70 is not limited to the above example, the wireless communication unit 70 may be disposed in any position in the automatic two-wheel vehicle 10. For example, the wireless communication unit 70 may be disposed in a position below the tandem seat 12t as with a wireless communication unit 170 shown by a dash-double-dot line in Fig. 1. When the automatic two-wheel vehicle 10 includes a space for housing a luggage, the wireless communication unit may be disposed in a position other than the housing space. Accordingly, a housing amount of the housing space can be easily ensured.

Configurations described in the above-mentioned embodiments and modification examples can be combined with each other as appropriate unless any contradiction occurs.

The functionality of the elements disclosed in the present specification may be implemented using circuitry or processing circuitry which includes general purpose processors, special purpose processors, integrated circuits, Application Specific Integrated Circuits (ASICs), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed in the present specification or otherwise known which is programmed or configured to carry out the recited functionality. When the hardware is a processor which may be considered a type of circuitry, the circuitry, means, or units are a combination of hardware and software, the software being used to configure the hardware and/or processor.

The present specification and the diagrams disclose each aspect described hereinafter.

A first aspect is a vehicle performing wireless communication with a terminal apparatus, including: an electrical component; and a wireless communication unit formed separately from the electrical component and connected to the electrical component via a signal line.

According to the first aspect, the wireless communication unit formed separately from the electrical component is connected to the electrical component via the signal line; thus, a wireless communication function can be easily added. The wireless communication unit is formed separately from the electrical component, thus can be disposed in an optional position. Also from this viewpoint, it is possible to additionally installing or change the design of the wireless communication unit easily.

As with a second aspect, also applicable is the vehicle according to the first aspect, wherein the signal line is a common signal line connecting the electrical component and another electrical component.

Accordingly, the wireless communication unit can be connected to the electrical component via the common signal line, thus can be connected to the electrical component easily.

As with a third aspect, also applicable is the vehicle according to the first or second aspect, wherein the electrical component is a control unit controlling a power engine of a vehicle.

There is a possibility that the information regarding the behavior of the vehicle is collected in many cases in the control unit controlling the power engine of the vehicle. According to the third aspect, the information of the control unit can be transmitted outside the vehicle via the wireless communication unit, and the behavior of the vehicle on the outer part can be easily grasped.

As with a fourth aspect, also applicable is the vehicle according to any one of the first to third aspects, wherein the electrical component and the wireless communication unit are disposed with a positional relationship so as to be at least partially overlapped with each other in a front-back direction of a vehicle.

Accordingly, a wiring connected to the electrical component can be branched near the electrical component and connected to the wireless communication unit easily.

As with a fifth aspect, also applicable is the vehicle according to any one of the first to fourth aspects, wherein the electrical component is a control apparatus, and the wireless communication unit is located on an upper side than the control apparatus.

Accordingly, it is possible to hardly have access to the control apparatus by the wireless communication unit. Accordingly, measures against theft or tamper can be achieved.

As with a sixth aspect, also applicable is the vehicle according to any one of the first to fifth aspects, wherein the signal line includes a first signal line led out from the electrical component and a second signal line led out from the wireless communication unit, and a direction in which the first signal line extends from the electrical component is a same as a direction in which the second signal line extends from the wireless communication unit.

Accordingly, the first signal line and the second signal line are easily disposed together, and a space for arranging the signal line can be reduced. An operation of arranging the signal line can also be easily performed.

As with a seventh aspect, also applicable is the vehicle according to the sixth aspect, further including a junction component branching the signal line into the first signal line and the second signal line, wherein the junction component is disposed with a positional relationship so as to be at least partially overlapped with at least one of the electrical component and/or the wireless communication unit in the front-back direction of the vehicle.

Accordingly, a length of the first signal line or the second signal line can be reduced.

As with an eighth aspect, also applicable is the vehicle according to any one of the first to seventh aspects, further including an energy storage apparatus, wherein the wireless communication unit is located below the energy storage apparatus.

Accordingly, the energy storage apparatus can protect the wireless communication unit.

As with a ninth aspect, also applicable is the vehicle according to any one of the first to eighth aspects, further including a power engine, wherein the wireless communication unit is disposed above the power engine, and a partition intervenes between the power engine and the wireless communication unit.

In this case, since the partition intervenes between the power engine and the wireless communication unit, heat generated in the power engine is hardly transmitted to the wireless communication unit.

As with a tenth aspect, also applicable is the vehicle according to any one of the first to ninth aspects, further including: a first side cover; and a second side cover located adjacent to the first side cover, wherein in a side view, the wireless communication unit is located away from a joint between the first side cover and the second side cover.

Accordingly, even if water enters from the joint between the first side cover and the second side cover, the wireless communication unit hardly gets water.

As with an eleventh aspect, also applicable is the vehicle according to any one of the first to tenth aspects, further including a radiator including a radiator fan motor, wherein the wireless communication unit is located away from the radiator in a front-back direction of a vehicle.

Accordingly, noise influence by the radiator fan motor hardly reaches the wireless communication unit.

The foregoing description is in all aspects illustrative and does not restrict the present invention. Numerous modifications and variations that have not yet been exemplified are devised without departing from the scope of the present invention.

## Claims

1. A vehicle (10) performing wireless communication with a terminal apparatus (90), comprising:
an electrical component (61); and
a wireless communication unit (70) formed separately from the electrical component and connected to the electrical component via a signal line (80).

2. The vehicle according to claim 1, wherein
the signal line (80) is a common signal line connecting the electrical component (61) and another electrical component (62, 63).

3. The vehicle according to claim 1 or 2, wherein
the electrical component is a control unit (61) controlling a power unit of a vehicle.

4. The vehicle according to claim 1 or 2, wherein
the electrical component (61) and the wireless communication unit (70) are disposed with a positional relationship so as to be at least partially overlapped with each other in a front-back direction of the vehicle.

5. The vehicle according to claim 1 or 2, wherein
the electrical component is a control apparatus (61), and
the wireless communication unit (70) is located higher than the control apparatus (61).

6. The vehicle according to claim 1 or 2, wherein
the signal line (80) includes a first signal line (80a) led out from the electrical component (61) and a second signal line (80b) led out from the wireless communication unit (70), and
a direction in which the first signal line extends from the electrical component is a same as a direction in which the second signal line extends from the wireless communication unit.

7. The vehicle according to claim 6, further comprising
a junction component branching the signal line into the first signal line (80a) and the second signal line (80b), wherein
the junction component (88) is disposed with a positional relationship so as to be at least partially overlapped with the electrical component (61), the wireless communication unit (70), or both the electrical component and the wireless communication unit in a front-back direction of the vehicle.

8. The vehicle according to claim 1 or 2, further comprising
an energy storage apparatus (13), wherein
the wireless communication unit (70) is located below the energy storage apparatus.

9. The vehicle according to claim 1 or 2, further comprising
a power unit (24), wherein
the wireless communication unit (70) is disposed above the power unit, and
a partition (102a, 106b, 110a) intervenes between the power unit and the wireless communication unit.

10. The vehicle according to claim 1 or 2, further comprising:
a first side cover (40a); and
a second side cover (40b) located adjacent to the first side cover, wherein
in a side view, the wireless communication unit (70) is located away from a joint (40Ba) between the first side cover and the second side cover.

11. The vehicle according to claim 1 or 2, further comprising
a radiator (29) including a radiator fan motor (29fa), wherein
the wireless communication unit (70) is located away from the radiator in a front-back direction of the vehicle.
